# EUROPÄISCHE PATENTSCHRIFT

(11) **EP 2 177 855 B1**
(45) Veröffentlichungstag und Bekanntmachung des Hinweises auf die Patenterteilung: **23.03.2011**
(21) Anmeldenummer: 08017976.5
(22) Anmeldetag: 14.10.2008
(51) Int. Cl.: F28D 19/04, F16J 15/32

(54) **Regenerativer Wärmetauscher mit neuartiger Umfangsdichtung**
Regenerative heat exchanger with innovative surrounding seal
Echangeur thermique régénératif doté d'un joint périphérique d'un nouveau type

(43) Veröffentlichungstag der Anmeldung: 21.04.2010
(73) Patentinhaber: Balcke-Dürr GmbH, 57482 Wenden (DE)
(72) Erfinder: Raths, Heinz-Günter, 57462 Olpe (DE); Born, Erich, 57290 Neunkirchen (DE)
(74) Vertreter: Lang, Friedrich

(56) Entgegenhaltungen:
- DE-A1- 4 230 133
- GB-A- 697 377
- JP-A- 2001 041 667
- US-A- 2 471 995
- US-A- 2 579 212
- US-A- 3 194 301

## Beschreibung

Die Erfindung betrifft einen regenerativen Wärmetauscher wie dieser insbesondere in Kraftwerken eingesetzt wird.

Regenerative Wärmetauscher der betreffenden Art (im Folgenden nur als Wärmetauscher bezeichnet) dienen der Wärmeübertragung von wenigstens einem Gasvolumenstrom auf wenigstens einen anderen Gasvolumenstrom. Hierbei wird eine drehende (bzw. rotierende) Speichermasse (bzw. Wärmespeicher), der so genannte Rotor, abwechselnd durch wenigstens einen Gasvolumenstrom aufgewärmt und durch den wenigstens einen anderen Gasvolumenstrom wieder abgekühlt, wodurch Wärmeenergie von dem einen auf den anderen Gasvolumenstrom übertragen wird. Hierdurch kann einer der Gasvolumenströme aufgewärmt und ein anderer Gasvolumenstrom abgekühlt werden. Der Rotor weist zwei Stirnflächen (bzw. Stirnseiten), einen Umfangsmantel (bzw. Außenmantel) und in der Regel eine sogenannte Segmentierung auf. Der Rotor ist um eine zentrale Drehachse drehbar gelagert, wobei diese Drehachse vorzugsweise vertikal ausgerichtet ist.

Zur Abdichtung der durch den Wärmetauscher geführten Gasvolumenströme sind am Rotor sogenannte Radial- und Axialdichtungen sowie Umfangsdichtungen vorgesehen. Die Radialdichtungen sind an den Stirnflächen des Rotors und die Axialdichtungen am Rotormantel angeordnet und sollen einen Kurzschluss-Volumenstrom zwischen den Gasvolumenströmen verhindern. Die Umfangsdichtungen sind am Umfang des Rotors angeordnet und sollen einen Leckagevolumenstrom in das Gehäuse hinein oder in die Umgebung verhindern. Diese Dichtungen sind bezüglich des Rotors feststehend angeordnet. Aufgrund einer permanenten Relativbewegung zwischen dem Rotor und diesen Dichtungen sowie einer sich ständig verändernden Wärmeausdehnung des Rotors lässt sich eine absolute Abdichtung des Wärmetauschers nicht erzielen. Seit langem sind daher die Dichtungen und Dichtungssysteme an einem solchen Wärmetauscher Gegenstand intensiver Weiterentwicklungen, auch um damit den Wirkungsgrad solcher Wärmetauscher zu erhöhen.

Zur Erhöhung des Wirkungsgrades solcher Wärmetauscher sind zwischenzeitlich aus dem Stand der Technik komplexe Dichtungssysteme bekannt, die bspw. einen Kurzschluss-Volumenstrom und/oder einen Leckagevolumenstrom absaugen und in einen der Gasvolumenströme zurückführen. Darüber hinaus sind auch sogenannte Sperrgas-Systeme bekannt, die quasi mittels eines Überdrucks Kurzschluss-Volumenströme und/oder Leckagevolumenströme verhindern sollen. Letzteres wird auch als Abdrücken bezeichnet.

Aus der EP 0 588 185 A1 ist ein Rotor mit einer an seinem Umfangsrand von oben bzw. unten aufgelegten Umfangsdichtungen bekannt. Diese Umfangsdichtungen sind elastisch, d.h. nachgiebig federnd angestellt bzw. an den Rotor von oben bzw. unten angedrückt. Weitergehend hierzu sind mittlerweile auch Systeme mit einer sensorgesteuerten elektromechanischen Verstelleinrichtung für die Umfangsdichtungen bekannt, wie bspw. in der DE 40 13 484 A1 (vgl. dort Fig. 9 und 10) beschrieben. Diese Systeme sind jedoch unverhältnismäßig teuer, wartungsaufwändig und zudem störungsanfällig.

Ein Wärmetauscher mit den Merkmalen des Oberbegriffs des Anspruchs 1 ist aus der US 2471995 A bekannt.

Aufgabe der Erfindung ist es, die Abdichtung für einen Wärmetauscher der eingangs genannte Art zu verbessern.

Diese Aufgabe wird gelöst durch einen Wärmetauscher nach den Merkmalen des Anspruches 1. Vorteilhafte und bevorzugte Weiterbildungen sind Gegenstand der hiervon abhängigen Ansprüche.

Erfindungsgemäß wird ein Wärmetauscher vorgeschlagen, dessen Umfangsdichtung von außen dichtend am Umfangsmantel des Rotors anliegt, wobei diese Umfangsdichtung segmentelastisch ausgebildet ist. Die Axialdichtungen am Rotormantel sind hierbei nicht erforderlich.

Genau genommen liegt diese segmentelastische Umfangsdichtung zumindest entlang eines Umfangabschnitts ihrer Umfangslänge auf einer radialen Außenseite des Umfangsmantels des Rotors auf.

Der Vorteil hierbei ist, dass die Abdichtung des Rotors am Umfang wesentlich besser beeinflusst werden kann. Zudem ist vorgesehen, dass die Umfangsdichtung segmentelastisch (bzw. segmentweise elastisch) ausgebildet ist. Hierunter wird verstanden, dass die Umfangsdichtung über ihre Umfangslänge zumindest in einer radialen Richtung im Wesentlichen nicht steif bzw. starr ausgebildet ist. Dies kann bspw. dadurch realisiert sein, dass die Umfangsdichtung zumindest entlang eines Umfangabschnitts ihrer Umfangslänge flexibel ausgebildet ist. Ebenso ist es möglich, die Umfangsdichtung zumindest entlang eines Umfangabschnitts aus mehreren separaten, im Wesentlichen steifen bzw. starren Umfangsegmenten (bzw. Bogensegmente) im Wesentlichen spaltfrei zusammen zu setzen (sozusagen aneinander zu reihen), wobei einzelne oder alle dieser Umfangssegmente bspw. gelenkig miteinander verbunden sein können. Auch diverse Kombinationen dieser Ausführungsarten sind möglich. Ebenso ist es auch möglich, die Umfangsdichtung kettenartig oder gurtartig auszubilden. Durch diese segmentelastische Ausbildung der Umfangsdichtung kann diese zumindest segment- oder bereichsweise besser von radial außen an den Umfangsmantel des Rotors angestellt bzw. angedrückt oder angepresst werden und/oder sich selbst, bspw. mittels im Material wirkender elastischer Kräfte, besser an diesen andrücken. Infolge dieser segmentelastischen Ausbildung ist es der Umfangsdichtung ebenso möglich, eine radiale Unwucht des Rotors, bspw. infolge sich verändernder Wärmeausdehnung, auszugleichen, indem sie der Unwuchtbewegung folgt. Dichtspalte am Rotorumfang lassen sich somit minimalisieren. Damit wird die Abdichtung des Wärmetauschers deutlich verbessert. Fernerhin können die eingangs beschriebenen automatischen Verstelleinrichtungen für die Umfangsdichtung entfallen.

Vorzugsweise ist die Umfangsdichtung im Bereich einer Stirnfläche des Rotors angeordnet, d.h. sie befindet bezüglich einer Seitenansicht in etwa auf Höhe einer Stirnfläche. Insbesondere sind zwei Umfangsdichtungen vorgesehen, die sich im Bereich der oberen und der unteren Stirnfläche des Rotors befinden.

Bevorzugt ist zudem vorgesehen, dass die Umfangsdichtung den Rotor umfangsmäßig, vollständig umschließt. Alternativ kann die Umfangsdichtung den Rotor jedoch auch abschnittsweise in Form einzelner Umfangssegmente umschließen. Im letzteren Fall ist insbesondere vorgesehen, dass sich ein solches Umfangssegment über einen Umfangsabschnitt des Rotors erstreckt, der den Bereich eines einzelnen durch den Rotor tretenden Gasvolumenstroms umschließt bzw. begrenzt. Einzelne Umfangssegmente können, wie bereits erläutert, miteinander verbunden sein.

Die segmentelastische Umfangsdichtung des erfindungsgemäßen Wärmetauschers ist über mehrere tangential angreifende Stangen einstellbar, wobei jede dieser Stangen auf einen definierten, d.h. vorbestimmten Umfangsabschnitt der Umfangsdichtung, und zwar im Bereich des Kraftkopplungspunktes zwischen Stange und Umfangsdichtung, separat, d.h. unabhängig von den anderen Stangen, eine definierte Zug- und/oder Druckkraft ausübt. Ein wesentlicher Vorteil ergibt sich insbesondere im Zusammenhang mit der segmentelastisch ausgebildeten Umfangsdichtung. Durch Ausüben einer definierten Zug- und/oder Druckkraft kann diese Umfangsdichtung entlang des definierten Umfangabschnitts besser an den Umfangsmantel des Rotors angestellt bzw. angedrückt oder angepresst werden. Die Umfangsdichtung kann somit quasi in einzelnen Umfangsabschnitten nachgeführt werden. Damit kann die Abdichtung über den Rotorumfang bzw. über die Umfangslänge der Umfangsdichtung abschnittsweise bzw. bereichsweise eingestellt werden. Ein solcher Umfangsabschnitt kann bspw. einem einzelnen, separat ausgebildeten Umfangssegment der Umfangsdichtung entsprechen. Infolge des tangentialen Aufbringens der Zug- und/oder Druckkräfte wirkt die aufgebrachte Kraft, insbesondere bei einer flexiblen Umfangsdichtung, nicht punktuell auf die Umfangsdichtung sondern wirkt auf einen Umfangsabschnitt (bzw. Längenabschnitt) der Umfangsdichtung ein. Zugkräfte wirken dabei tangential entgegen der Drehrichtung des Rotors, Druckkräfte wirken tangential in Drehrichtung des Rotors. Das Aufbringen von tangentialen Zug- und/oder Druckkräfte bietet zudem den Vorteil, dass die Stangen von der Umfangsdichtung nicht nach radial außen vorstehen. Ein weiterer Vorteil ist auch darin zu sehen, dass auf Kompensatoren verzichtet werden kann.

Bevorzugt ist vorgesehen, dass diese Stangen über den Umfang der Umfangsdichtung gleichmäßig verteilt angeordnet sind, wodurch über den Umfang eine gleichmäßige Kraftbeaufschlagung der Umfangsdichtung möglich ist. Die Kraftbeaufschlagung einer Stange kann bspw. mittels hydraulischer, pneumatischer und/oder elektromechanischer Aktuatoren erfolgen. Die Kraftbeaufschlagung kann geregelt oder gesteuert sein. Die Kraftbeaufschlagung kann jeder Stange separat oder für alle Stangen gemeinsam erfolgen.

Gemäß einer weiterhin bevorzugten Weiterbildung ist vorgesehen, dass zur Kraftkopplung zwischen einer Stange und der Umfangsdichtung eine Befestigungseinrichtung an einem definierten Punkt oder Abschnitt der Umfangsdichtung angeordnet ist. Eine Befestigungseinrichtung kann insbesondere eine Klemmeinrichtung oder dgl. sein, die mechanisch an die Umfangsdichtung befestigt ist. Hierbei ist insbesondere vorgesehen, dass wenigstens eine Stange an ihrem der Umfangsdichtung zugewandeten Ende hakenartig ausgebildet ist um in eine korrespondierende Öse an dieser Befestigungseinrichtung einzugreifen. Dies ermöglicht ein einfaches Entkoppeln bspw. für Wartungen und Reparaturen. Zudem wird eine Relativbewegung der miteinander verbundenen Teile mit vielen Freiheitsgraden ermöglicht. Selbstverständlich ist auch ein Vertauschen von Öse und Haken möglich.

Bevorzugt ist zudem, dass wenigstens eine der Stangen permanent federkraftbeaufschlagt ist, um eine permanente tangentiale Zugkraft auf einen Umfangsabschnitt der Umfangdichtung auszuüben. Hierdurch kann dauerhaft eine gute Abdichtung in dem betreffenden Umfangsabschnitt erzielt werden, indem die Umfangsdichtung im Bereich des Kraftkopplungspunktes und entlang eines definierten Umfangsabschnitts besser an den Rotor angedrückt bzw. angestellt oder angedrückt wird. Der gekrümmte Umfangsabschnitt der Umfangsdichtung wird infolge der auf ihn tangential einwirkenden Zugkraft zumindest auf einer Seite des Kraftkopplungspunktes verstärkt an den Rotor angedrückt (bei Druckkräften gilt selbiges entsprechend). Besonders vorteilhaft ist es, wenn alle am Umfang der Umfangsdichtung verteilt angeordneten Stangen zeitgleich Zugkräfte auf die Umfangsdichtung ausüben. Hierdurch kann über den gesamten Umfang des Rotors die Abdichtung entscheidend verbessert werden, wobei gleichzeitig auch eine radiale Unwucht des Rotors, bspw. infolge sich verändernder Wärmeausdehnung, von der Umfangsdichtung ausgleichbar ist.

Zur Erzeugung der Zugkraft ist insbesondere eine mechanische Federeinrichtung vorgesehen, mit welcher die Stange an ihrem dem der Umfangsdichtung abgewandten Ende verbunden im Sinne von kraftmäßig gekoppelt ist. Eine solche mechanische Federeinrichtung ist besonders vorteilhaft, weil sie die zuvor beschriebene Wirkungsweise der Abdichtung positiv unterstützt. Die Feder eine Federeinrichtung übt einerseits eine permanente Zugkraft auf die Stange und respektive auf den zugehörigen Umfangsabschnitt der Umfangdichtung aus und ermöglicht gleichzeitig eine radiale und/oder tangentiale Bewegung der Stange respektive des Umfangsabschnitts der Umfangsdichtung, um bspw. eine radiale Unwucht des Rotors auszugleichen bzw. dieser radialen Unwucht zu folgen. Insbesondere ist vorgesehen, dass die Zugkraft einer Federeinrichtung individuelle einstellbar ist, bspw. durch Verändern der Federvorspannung. Falls die Umfangsdichtung aus einzelnen separaten Umfangssegmenten zusammengesetzt ist, so ist bevorzugt pro Umfangssegment wenigstens eine und insbesondere exakt eine Stange und eine zugeordnete Federeinrichtung vorgesehen. In gleicher Weise ist es auch möglich, durch eine Federeinrichtung eine Druckkraft auf die Umfangsdichtung auszuüben.

Weiterhin bevorzugt ist, dass die Stangen und/oder die Federeinrichtungen im Wesentlichen vollständig innerhalb eines Gehäuses des Wärmetauschers angeordnet sind. Im Wesentlichen bedeutet, dass evtl. eine Zugänglichkeit zu den Stangen und/oder den Federeinrichtungen von Außerhalb des Gehäuses vorgesehen sein kann, bspw. um diese einstellen, überprüfen und warten zu können.

Eine Weiterbildung sieht vor, dass wenigstens eine der Stangen entlang ihrer axialen Richtung gekrümmt und/oder gekröpft und vorzugsweise doppelt gekröpft ausgebildet ist. Damit kann eine solche Stange um ein bauliches Hindernis herumgeführt oder der Umfangskrümmung des Rotors angepasst werden, um deren Platzbedarf zu minimieren.

Eine andere Weiterbildung sieht vor, dass an der Außenseite bzw. Außenfläche des Umfangsmantels des Rotors wenigstens ein radial nach außen vorstehender Umfangskranz angeordnet ist, auf dem die Umfangsdichtung oder zumindest ein Umfangsabschnitt der Umfangsdichtung aufliegt bzw. an diesen angedrückt oder angepresst wird. Bevorzugt ist vorgesehen, dass dieser Umfangskranz den Rotor vollständig umschließt. Damit befindet sich die Umfangsdichtung in einem thermisch günstigeren Bereich.

Gemäß einer vorteilhaften Weiterbildung hiervon ist vorgesehen, dass die radial außen liegende Fläche des Umfangkranzes als separater Verschleißschutz ausgebildet ist. Dies ermöglicht ein einfaches Austauschen dieser Reibfläche, wobei die Wartungsfreundlichkeit durch den Umfangskranz weiterhin verbessert wird. Ein solcher Verschleißschutz kann bevorzugt eine ringartig umlaufende Metallfläche sein, insbesondere aus einem Edelstahl, die insbesondere auf den Umfangskranz aufgeschraubt ist. Der Verschleißschutz kann ebenso, was bevorzugt ist, aus einem Keramikwerkstoff gebildet sein.

Bevorzugt ist zudem, dass der erfindungsgemäße Wärmetauscher mit einem eingangs genannten Absaug-System bzw. Sperrgas-System kombiniert wird. Falls Sperrgas-Systeme in Kombination eingesetzt werden, so reduziert sich bei dem erfindungsgemäßen Wärmetauscher die Sperrgasmenge an der Umfangsdichtung auf etwa 20 % bezogen auf die im Stand der Technik erforderliche Sperrgasmenge. Hieraus resultieren u.a. kleinere Sperrgas-Ventilatoren und/oder kleinere Sperrgas-Leitungen.

Nachfolgend werden im Zusammenhang mit den Figuren mehrere bevorzugte Ausführungsformen der Erfindung erläutert. Auch Merkmale einzelner Ausführungsformen und Ausführungsalternativen sind zugleich allgemeine Merkmale der Erfindung und daher auf andere Ausführungsbeispiele übertragbar.

Es zeigen:
- Fig. 1: ein Ausführungsform des erfindungsgemäßen Wärmetauschers in einer Draufsicht;
- Fig. 2: einen vergrößerten Ausschnitt aus dem erfindungsgemäßen Wärmetauscher nach der Fig. 1;
- Fig. 3: zwei Teilschnitte durch den erfindungsgemäßen Wärmetauscher gemäß dem Schnitt- verlauf nach der Fig. 2;
- Fig. 4: einen vergrößerten Ausschnitt aus dem Wärmetauscher nach der Figur 1 in einer leicht abgewandelten Ausführungsform in einer Draufsicht; und
- Fig. 5: eine offengelegte Teil-Seitenansicht auf die obere Umfangsdichtung gemäß dem Schnittverlauf nach der Fig. 4.

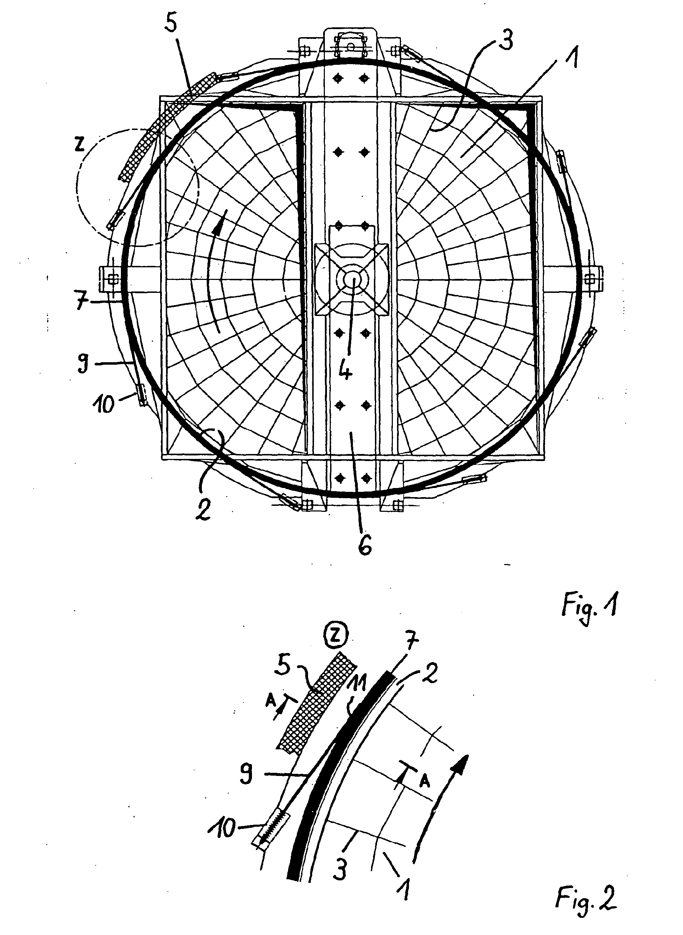

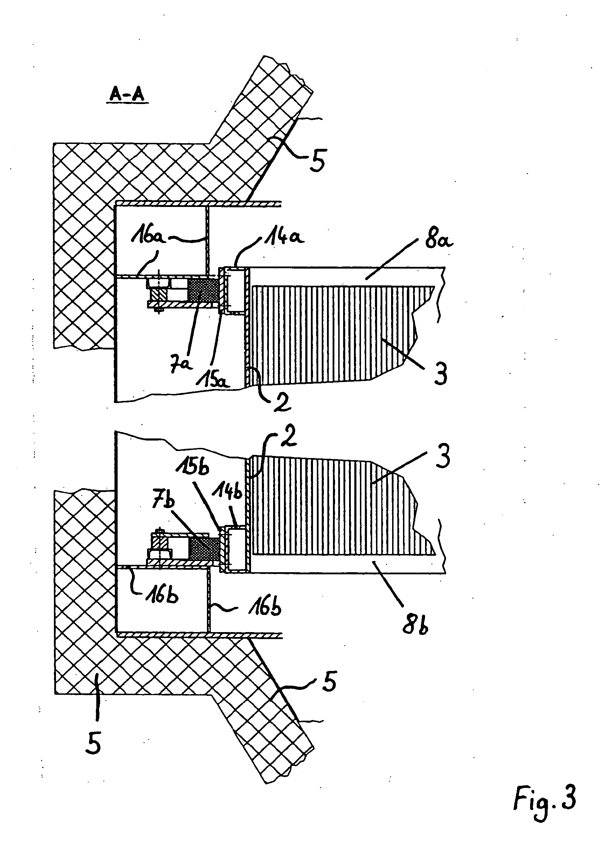

Die Figur 1 zeigt eine Ausführungsform des erfindungsgemäßen Wärmetauschers in einer Draufsicht. Der Wärmetauscher umfasst einen Rotor 1, von dem hier die obere Stirnfläche (8a; vgl. Fig. 3) sichtbar ist. Dieser Rotor 1 weist einen Umfangsmantel bzw. Außenmantel 2 und eine Segmentierung 3 auf. Der Rotor 1 ist um eine zentrale Achse 4 gemäß Pfeildarstellung drehbar in einem Gehäuse 5 gelagert, dass hier nur teilweise dargestellt ist. Über die obere Stirnfläche 8a des Rotors 1 erstreckt sich eine Brücke 6, welche einen Gasvolumenstrom durch den rechten Bereich des Rotors 1 von einem Gasvolumenstrom auf der linken Seite des Rotors 1 trennt und an deren Unterseite zum Rotor 1 hin Radialdichtungen angeordnet sind, die einen Kurzschluss-Volumenstrom zwischen diesen Gasvolumenströmen verhindern sollen. Am Umfangsmantel 2 des Rotors 1 liegt von radial außen eine segmentelastische Umfangsdichtung 7 an, welche den Rotor 1 vollständig umgibt bzw. umschließt. In der gezeigten Ausführungsform ist die Umfangsdichtung 7 über acht Stangen 9 mit tangentialen Zugkräften von jeweils einer Federeinrichtung 10 beaufschlagt. Die Kraftkopplungspunkte bzw. Kraftangriffspunkte der Stangen 9 sind über den Umfang des Rotors 1 bzw. der Umfangsdichtung 7 in gleichen Umfangsabständen angeordnet. Die Stangen 9 und die Federeinrichtungen 10 sind identisch ausgebildet. Die auf die Umfangsdichtung 7 aufgebrachten Zugkräfte wirken jeweils entgegen der Drehrichtung des Rotors 1.

Die Figur 2 zeigt einen vergrößerten Ausschnitt aus dem Umfangsmantel 2 des Wärmetauschers gemäß dem in der Figur 1 gekennzeichneten Bereich Z. In dieser vergrößerten Darstellung ist gut zu erkennen, dass zwischen dem Umfangsmantel 2 des Rotors 1 und der Umfangsdichtung 7 nur ein minimaler Spalt gegeben ist, womit Leckagenvolumenströme weitgehend verhindert werden. Eine von der Federeinrichtung 10 bereitgestellte Zugkraft wirkt über die Stange 9 am Kraftkopplungspunkt 11 auf die Umfangsdichtung 7 ein, derart, dass die Umfangsdichtung 9 am Kraftkopplungspunkt 11 entgegen der Drehrichtung des Rotors 1 gezogen wird. (Wie bereits oben erläutert, kann im Kraftkopplungspunkt 11 ebenso eine Druckkraft in die Umfangsdichtung 7 eingeleitet werden, die dann in Drehrichtung des Rotors wirkt.) Diese Zugkraft bewirkt, dass der Abschnitt der Umfangsdichtung 7 der bzgl. der Drehrichtung des Rotors dem Kraftkopplungspunkt 11 nachgelagert ist verstärkt an den Umfangsmantel 2 des Rotors 1 angedrückt bzw. angelegt wird. In Reaktion hierauf wird jedoch genau dieser Abschnitt der Umfangsdichtung 7 von dem drehenden Rotor 1 nach radial außen gedrückt, was dazu führt, dass auch der bzgl. der Drehrichtung des Rotors 1 dem Kraftkopplungspunkt 11 vorgelagerte Abschnitt der Umfangsdichtung verstärkt an den Umfangsmantel 2 des Rotors 1 angedrückt wird. Dieser Effekt wird durch die segmentelastisch Ausbildung der Umfangsdichtung 7 begünstigt.

Der vergrößerten Darstellung der Figur 2 ist ebenfalls sehr gut zu entnehmen, dass sowohl die Stange 9 als auch die Federeinrichtung 10 im Wesentlichen innerhalb des Gehäuses 5 angeordnet sind.

Es soll nochmals ausdrücklich betont werden, dass die Stangen 9 prinzipiell sowohl auf Zug als auch auf Druck beansprucht werden können, so dass die Umfangsdichtung 7 am Kraftkopplungspunkt 11 quasi in beiden Richtungen (in Drehrichtung des Rotors 1 und entgegen der Drehrichtung des Rotors 1) sozusagen relativ zum Rotor 1 nachgeführt werden kann. Dieses Nachführen kann punktuell an einem einzelnen Kraftkopplungspunkt 11 oder gleichzeitig an allen Kraftkopplungspunkten 11 mit gleicher oder unterschiedlicher Kraft erfolgen.

Die Figur 3 zeigt zwei Teilschnitte durch den Wärmetauscher gemäß dem Schnittverlauf A-A in de Figur 2. Die Figur entspricht einer geschnitten Seitenansicht des Wärmetauschers bzw. des Rotors 1. Die obere Darstellung der Figur 3 zeigt den Bereich der oberen Stirnfläche 8a des Rotors 1, die untere Darstellung der Figur 3 zeigt den Bereich der unteren Stirnfläche 8b des Rotors 1. Ein mittlerer Abschnitt des Rotors 1 zwischen diesen beiden Bereichen ist ausgespart. In etwa auf Höhe der oberen Stirnfläche 8a des Rotors 1 ist am Umfangsmantel 2 ein radial nach außen vorstehender, umlaufender Umfangskranz 14a angeordnet. Dieser Umfangskranz 14a schließt nach oben hin in etwa mit der oberen Stirnfläche 8a ab. Auf diesem Umfangskranz 14a ist radial außenliegend ein Verschleißschutz 15a aufgeschraubt, der bspw. aus einem umlaufenden oder segmentierten Edelstahlblechring oder Keramiksegmenten gebildet sein kann. Eine obere Umfangsdichtung 7a, gemäß der zuvor beschriebenen Art, liegt von radial außen dichtend am rotierenden Umfangsmantel 2 an. Die Umfangsdichtung 7a ist über eine konstruktiv verhältnismäßig einfache Abstützung bzw. Halterung 16a am Gehäuse 5 gehalten bzw. befestigt. Für den Bereich der unteren Stirnfläche 8b gemäß der unteren Darstellung der Figur 3 gelten die zuvorigen Ausführungen entsprechend, wobei gleiche Komponenten mit dem Suffix "b" bezeichnet sind.

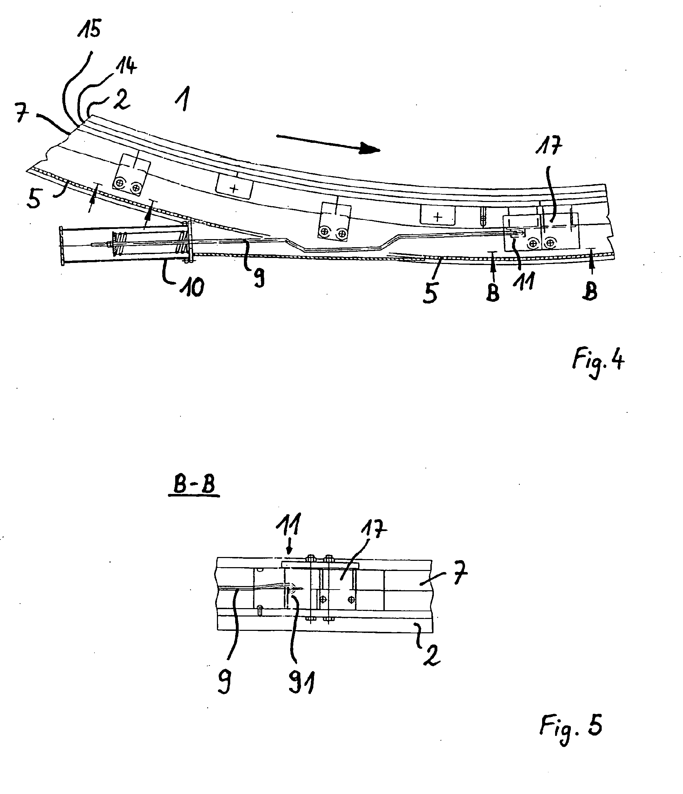

Die Figur 4 zeigt einen Ausschnitt des Rotors 1 nach der Figur 1 in einer leicht abgewandelten Ausführungsform in einer Draufsicht. Diese Darstellung entspricht in etwa der Darstellung der Figur 2. Der Rotor 1 weist hier wiederum einen Umfangsmantel 2 mit einem Umfangskranz 14 und einem Verschleißschutz 15 auf. Von radial außen liegt die Umfangsdichtung 7 dichtend am Umfangsmantel 2 des Rotors 1, genau genommen am Verschleißschutz 15 an. Wie oben erläutert wird auch hier die Umfangsdichtung 7 an dem dargestellten Kraftkopplungspunkt 11 mittels einer Federeinrichtung 10 und einer Stange 9 mit einer tangentialen Zugkraft beaufschlagt, wodurch die Umfangsdichtung 7 im Bereich dieses Kopplungspunktes 11 verstärkt an den Umfangsmantel 2 des Rotors 1 angedrückt wird, wie oben erläutert. Am Kraftkopplungspunkt 11 ist eine Befestigungseinrichtung 17 vorgesehen, welche mechanisch an die Umfangsdichtung 7 geklemmt wird (was sich sehr gut aus der Darstellung in der Figur 5 ergibt). Die Federvorspannung der Schraubenfeder in der Federeinrichtung 10 ist, wie dargestellt, über eine Druckplatte, sowie Gewindeschaft und Muttern veränderbar bzw. einstellbar. Alternativ können auch andere Federn verwendet werden, insbesondere hydraulische und/oder pneumatische Federn. Durch eine andere Anordnung der Feder kann im Übrigen ebenso auch eine Druckkraft auf die Stange 9 ausgeübt werden. Die Stange 9 ist, wie dargestellt, in ihrer Längsrichtung zwischen der Federeinrichtung 10 und der Klemmeinrichtung 17 doppelt gekröpft ausgebildet, so dass diese um andere Baukomponenten in ihrem Erstreckungsbereich herumgeführt werden kann. Alternativ ist es ebenso möglich, die Stange 9 mit einer Krümmung bzw. zumindest einem gekrümmten Abschnitt auszubilden.

Die axiale Länge der Stange 9 ist so bemessen, dass diese, abweichend zu den obigen Ausführungen, aus dem Innenbereich des Gehäuses 5 herausgeführt werden kann. Die Federeinrichtung 10 ist im Wesentlichen vollständig außerhalb des Gehäuses 5 angeordnet, was deren Einstellbarkeit und Wartbarkeit erleichtert. Die Gehäuseabdichtung gestaltet sich in diesem Fall jedoch als aufwändiger.

Die Figur 5 zeigt eine Seitenansicht auf die Befestigungseinrichtung bzw. Klemmeinrichtung 17, wozu das Gehäuse 5 gemäß dem Schnittverlauf B-B nach der Figur 4 aufgeschnitten dargestellt ist. Zu erkennen ist hier die hakenartige Ausbildung des der Umfangsdichtung 7 zugewandten Endes 91 der Stange 9, um eine einfach lösbare Verbindung zur Klemmvorrichtung 17 zu bewerkstelligen. Die gezeigte Verbindung ist besonders für die Übertragung einer tangentialen Zugkraft von der Stange 9 auf die Klemmvorrichtung 17 geeignet.

## Patentansprüche

1. Wärmetauscher, insbesondere regenerativer Wärmetauscher, mit einem als Rotor (1) ausgebildeten Wärmespeicher, der um eine zentrale Drehachse (4) drehbar gelagert ist und der Wärmeenergie von wenigstens einem durch den Rotor (1) tretenden Gasvolumenstrom auf wenigstens einen andern durch den Rotor (1) tretenden Gasvolumenstrom überträgt, mit wenigstens einer Umfangsdichtung (7) welche den Rotor (1) an seinem Umfang abdichtet, wobei die Umfangsdichtung (7), vorzugsweise im Bereich einer Stirnseite (8a, 8b) des Rotors (1), von außen dichtend an einem Umfangsmantel (2) des Rotors (1) anliegt und wobei diese Umfangsdichtung (7) segmentelastisch ausgebildet ist,
**dadurch gekennzeichnet, dass**
die segmentelastische Umfangsdichtung (7) über mehrere tangential angreifende Stangen (9) einstellbar ist, wobei jede dieser Stangen (9) auf einen definierten Umfangsabschnitt der Umfangsdichtung (7) separat eine definierte Zug- ünd/oder Druckkraft ausübt.

2. Wärmetauscher nach Anspruch 1,
**dadurch gekennzeichnet, dass**
zur Kraftkopplung zwischen einer Stange (9) und der Umfangsdichtung (7) eine Befestigungseinrichtung, insbesondere eine Klemmeinrichtung (17), an einem definierten Punkt der Umfangsdichtung (7) angeordnet ist.

3. Wärmetauscher nach Anspruch 2,
**dadurch gekennzeichnet, dass**
wenigstens eine Stange (9) an ihrem der Umfangsdichtung (7) zugewandeten Ende hakenartig ausgebildet ist um in eine korrespondierende Öse an der Befestigungseinrichtung eingreifen zu können.

4. Wärmetauscher nach einem der vorausgehenden Ansprüche,
**dadurch gekennzeichnet, dass**
wenigstens eine der Stangen (9) permanent federkraftbeaufschlagt ist, um eine permanente tangentiale Zugkraft auf einen Umfangsabschnitt der Umfangdichtung (7) auszuüben.

5. Wärmetauscher nach Anspruch 4,
**dadurch gekennzeichnet, dass**
zur Erzeugung der Zugkraft eine mechanische Federeinrichtung (10) vorgesehen ist, mit welcher die Stange (9) an ihrem dem der Umfangsdichtung (7) abgewandten Ende verbunden ist.

6. Wärmetauscher nach Anspruch 1 und/oder nach Anspruch 5,
**dadurch gekennzeichnet, dass**
die Stangen (9) und/oder die Federeinrichtungen (10) im wesentlichen vollständig innerhalb eines Gehäuses (5) des Wärmetauschers angeordnet sind.

7. Wärmetauscher nach einem der vorausgehenden Ansprüche,
**dadurch gekennzeichnet, dass**
wenigstens eine der Stangen (9) entlang ihrer axialen Richtung gekrümmt oder gekröpft und vorzugsweise doppelt gekröpft ausgebildet ist.

8. Wärmetauscher nach einem der vorausgehenden Ansprüche,
**dadurch gekennzeichnet, dass**
an der Außenseite des Umfangsmantels (2) des Rotors (1) wenigstens ein radial nach außen vorstehender Umfangskranz (14) angeordnet ist, auf dem die Umfangsdichtung (7) oder zumindest ein Umfangsabschnitt der Umfangsdichtung (7) aufliegt.

9. Wärmetauscher nach Anspruch 8,
**dadurch gekennzeichnet, dass**
die radial außen liegende Fläche des Umfangkranzes (14) als separater Verschleißschutz (15) ausgebildet ist.

## Claims

1. A heat exchanger, in particular a regenerative heat exchanger, having a heat accumulator implemented as a rotor (1), which is mounted so it is rotatable around a central rotational axis (4) and which transmits thermal energy from at least one gas volume stream passing through the rotor (1) to at least one other gas volume stream passing through the rotor (1), having at least one peripheral seal (7), which seals the rotor (1) on its periphery, the peripheral seal (7) pressing against a peripheral jacket (2) of the rotor (1) to form a seal, preferably in the area of a front side (8a, 8b) of the rotor (1), and this peripheral seal (7) being implemented as segmented-elastic,
**characterized in that** the segmented-elastic peripheral seal (7) is adjustable via multiple tangentially engaging rods (9), each of these rods (9) separately exerting a defined tensile and/or compressive force on a defined peripheral section of the peripheral seal (7).

2. The heat exchanger according to Claim 1,
**characterized in that** a fastening unit, in particular a clamping unit (17), is situated at a defined point of the peripheral seal (7) for force coupling between a rod (9) and the peripheral seal (7).

3. The heat exchanger according to Claim 2,
**characterized in that** at least one rod (9) is implemented as hooked on its end facing toward the peripheral seal (7), in order to be able to engage in a corresponding eye on the fastening unit.

4. The heat exchanger according to one of the preceding claims,
**characterized in that** at least one of the bars (9) permanently has a spring force applied thereto, in order to exert a permanent tangential tensile force on a peripheral section of the peripheral seal (7).

5. The heat exchanger according to Claim 4,
**characterized in that** a mechanical spring unit (10) is provided to generate the tensile force, to which the rod (9) is connected on its end facing away from the peripheral seal (7).

6. The heat exchanger according to Claim 1 and/or Claim 5,
**characterized in that** the rods (9) and/or the spring units (10) are situated essentially completely inside a housing (5) of the heat exchanger.

7. The heat exchanger according to one of the preceding claims,
**characterized in that** at least one of the rods (9) is implemented as curved or bent and preferably bent twice along its axial direction.

8. The heat exchanger according to one of the preceding claims,
**characterized in that** at least one peripheral collar (14), which protrudes radially outward, and on which the peripheral seal (7) or at least one peripheral section of the peripheral seal (7) rests, is situated on the outer side of the peripheral jacket (2) of the rotor (1).

9. The heat exchanger according to Claim 8,
**characterized in that** the radial external surface of the peripheral collar (14) is implemented as a separate wear protector (15).

## Revendications

1. Échangeur de chaleur, en particulier échangeur de chaleur à régénération, avec un accumulateur de chaleur conçu comme un rotor (1) qui est supporté avec possibilité de rotation autour d'un axe de rotation vertical (4) et qui transmet l'énergie thermique d'au moins un flux volumique de gaz passant à travers le rotor (1) à au moins un autre flux volumique de gaz passant à travers le rotor (1), avec au moins un joint de circonférence (7) qui assure l'étanchéité du rotor (1) sur sa circonférence, lequel joint de circonférence (7) repose par l'extérieur de façon étanche, de préférence au niveau d'une face d'extrémité (8a, 8b) du rotor (1), sur une enveloppe de circonférence (2) du rotor (1), et lequel joint de circonférence (7) est élastique par segments, **caractérisé en ce que** le joint de circonférence (7) élastique par segments peut être ajusté à l'aide de plusieurs barres (9) se mettant en prise de façon tangente, chacune de ces barres (9) exerçant séparément une force de traction et/ou de poussée définie sur une partie de circonférence définie du joint de circonférence (7).

2. Échangeur de chaleur selon la revendication selon la revendication 1, **caractérisé en ce qu'**en vue du couplage de force entre une barre (9) et le joint de circonférence (7), un dispositif de fixation, de préférence un dispositif de serrage (17), est disposé en un point défini du joint de circonférence (7).

3. Échangeur de chaleur selon la revendication 2, **caractérisé en ce qu'**au moins une barre (9) est conformée en forme de crochet à son extrémité dirigée vers le joint de circonférence (7) pour pouvoir se mettre en prise dans un oeillet correspondant sur le dispositif de fixation.

4. Échangeur de chaleur selon l'une des revendications précédentes, **caractérisé en ce qu'**au moins une des barres (9) est constamment contrainte par la force d'un ressort pour exercer une force de traction tangentielle permanente sur une section de circonférence du joint de circonférence (7).

5. Échangeur de chaleur selon la revendication 4, **caractérisé en ce que** pour produire la force de traction, il est prévu un dispositif mécanique à ressort (10) avec lequel la barre (9) est reliée à son extrémité opposée au joint de circonférence (7).

6. Échangeur de chaleur selon la revendication 1 et/ou selon la revendication 5, **caractérisé en ce que** les barres (9) et/ou les dispositifs à ressort (10) sont disposés sensiblement complètement à l'intérieur d'un logement (5) de l'échangeur de chaleur.

7. Échangeur de chaleur selon l'une des revendications précédentes, **caractérisé en ce qu'**au moins une des barres (9) est courbée ou coudée le long de son orientation axiale et de préférence doublement coudée.

8. Échangeur de chaleur selon l'une des revendications précédentes, **caractérisé en ce qu'**est disposée sur la face extérieure de l'enveloppe de circonférence (2) du rotor (1) au moins une couronne de circonférence (14) faisant saillie vers l'extérieur dans le sens radial, sur laquelle repose le joint de circonférence (7) ou au moins une section de circonférence du joint de circonférence (7).

9. Échangeur de chaleur selon la revendication 8, **caractérisé en ce que** la surface de la couronne de circonférence (14) située vers l'extérieur dans le sens radial est conformée comme une protection séparée contre l'usure (15).
